# EUROPÄISCHE PATENTSCHRIFT

(11) **EP 2 516 572 B1**
(45) Veröffentlichungstag und Bekanntmachung des Hinweises auf die Patenterteilung: **13.06.2018**
(21) Anmeldenummer: 10790403.9
(22) Anmeldetag: 07.12.2010
(51) Int. Cl.: C09J 5/06, C09J 11/04

(54) **HITZEAKTIVIERT VERKLEBBARE FLÄCHENELEMENTE**
HEAT-ACTIVATED, GLUEABLE SURFACE ELEMENTS
ÉLÉMENTS PLANS POUVANT ÊTRE COLLÉS PAR ACTIVATION THERMIQUE

(30) Priorität: 21.12.2009 DE 102009055099
(43) Veröffentlichungstag der Anmeldung: 31.10.2012
(73) Patentinhaber: tesa SE, 22848 Norderstedt (DE)
(72) Erfinder: ENGELDINGER, Hans Karl, 25451 Quickborn (DE); GRÜNAUER, Judith, 22117 Hamburg (DE); KEITE-TELGENBÜSCHER, Klaus, 22529 Hamburg (DE)
(86) Internationale Anmeldenummer: PCT/EP2010/069057
(87) Internationale Veröffentlichungsnummer: WO 2011/085874

(56) Entgegenhaltungen:
- WO-A1-2010/037676
- DE-A1- 10 210 661
- DE-A1-102007 007 617

## Beschreibung

Die Erfindung betrifft ein hitzeaktiviert verklebbare Flächenelemente insbesondere mit hohen Verklebungskräften für Kunststoff-Kunststoff-Verklebungen sowie ein Verfahren für derartige Verklebungen.

Hitzeaktiviert verklebbare Flächenelemente (hitzeaktivierbare Flächenelemente) werden eingesetzt, um hochfeste Verbindungen von Fügeteilen zu erhalten. Insbesondere eignen sich derartige Flächenelemente, um bei einer geringeren Dicke der Klebefuge vergleichbare oder höhere Festigkeiten zu erreichen als dies mit Flächenelementen möglich ist, die ausschließlich Haftklebemassensysteme enthalten. Derartige hochfeste Verklebungen sind insbesondere bei der voranschreitenden Miniaturisierung von elektronischen Geräten von Bedeutung, etwa im Bereich der Konsumgüterelektronik, der Unterhaltungselektronik oder der Kommunikationselektronik, zum Beispiel für Mobiltelefone, PDAs, Laptops und andere Rechner, Digitalkameras und Anzeigegeräte wie etwa Displays und Digitalreader.

In besonderem Maße steigen die Anforderungen an die Verarbeitbarkeit und Stabilität von Klebeverbindungen bei tragbaren Konsumgüterelektronikartikeln. Dies liegt zum einen daran, dass die Abmessungen solcher Artikel immer geringer werden, so dass sich auch die für eine Klebeverbindung nutzbare Fläche verringert. Zum anderen muss eine Klebeverbindung in derartigen Geräten besonders stabil sein, da tragbare Artikel starken mechanischen Belastungen wie etwa Stößen oder Stürzen standhalten müssen und zudem in einem breiten Temperaturbereich eingesetzt werden sollen.

Daher werden in derartigen Produkten bevorzugt hitzeaktiviert verklebbare Flächenelemente eingesetzt, die hitzeaktiviert verklebende Klebemassen aufweisen, also Klebemassen, die bei Raumtemperatur keine oder eine allenfalls geringe Eigenklebrigkeit aufweisen, unter Einwirkung von Hitze aber die für eine Verklebung erforderliche Klebkraft zu den jeweiligen Verklebungssubstraten (Fügepartnern, Haftgrund) aufbauen. Solche hitzeaktiviert verklebenden Klebemassen liegen bei Raumtemperatur häufig in fester Form vor, werden während des Verklebens aber durch Temperatureinwirkung entweder reversibel oder irreversibel in einen Zustand hoher Klebkraft überführt. Reversibel hitzeaktiviert verklebende Klebemassen sind zum Beispiel Klebemassen auf der Basis thermoplastischer Polymere, wohingegen irreversibel hitzeaktiviert verklebende Klebemassen etwa Reaktivklebemassen sind, in denen infolge einer thermischen Aktivierung chemische Reaktionen wie beispielsweise Vernetzungsreaktionen ablaufen, wodurch diese Klebemassen besonders für permanente hochfeste Verklebungen geeignet sind.

Dabei besteht insbesondere die Forderung nach immer dünneren Klebebändern, wobei die Festigkeitsanforderungen nicht reduziert werden. Hitzeaktivierbare Folien werden derzeit in einem sehr breiten Dickenbereich angeboten, so sind Dicken von 30 bis 250 µm nicht unüblich.

Allen hitzeaktiviert verklebenden Klebemassensystemen ist gemeinsam, dass diese beim Verkleben erhitzt werden müssen. Insbesondere bei Verklebungen, bei denen die Klebemassensysteme nach außen hin von den Verklebungssubstraten vollflächig abgedeckt sind, ist es besonders wichtig, die zum Aufschmelzen oder zur Aktivierung der Klebemasse erforderliche Wärme schnell zu der Verklebungsfläche hin zu transportieren. Ist dabei eines der Verklebungssubstrate ein guter Wärmeleiter, so ist es möglich, dieses Verklebungssubstrat durch eine externe Wärmequelle zu erwärmen, beispielsweise durch einen direkten Wärmeübertrager, eine Infrarotheizung oder dergleichen.

Die für eine schnelle homogene Erwärmung der bekannten Klebemasse erforderliche kurze Aufheizzeit lässt sich im Falle eines solchen direkten Erhitzens oder Kontakterhitzens allerdings nur für einen großen Temperaturgradienten zwischen der Wärmequelle und dem Verklebungssubstrat realisieren. Daher sollte das zu erwärmende Verklebungssubstrat selber gegenüber Temperaturen unempfindlich sein, die zum Teil sogar erheblich höher ausfallen können als es das Aufschmelzen oder Aktivieren der Klebemasse eigentlich erfordern würde. Problematisch ist also der Einsatz hitzeaktivierbarer Klebefolien für Kunst6stoff-Kunststoff-Verklebungen. Als Kunststoffe werden insbesondere in der Konsumgüterelektronik beispielsweise Polyvinylchlorid (PVC), Acrylnitril-Butadien-Styrol-Copolymere (ABS), Polycarbonate (PC), Polypropylen (PP) oder Blends basierend auf diesen Kunststoffen eingesetzt.

Anders ist die Situation also, wenn keines der Verklebungssubstrate die Wärme hinreichend gut leitet oder wenn die Verklebungssubstrate gegenüber höheren Temperaturen empfindlich sind, wie dies zum Beispiel bei vielen Kunststoffen der Fall ist, aber auch bei elektronischen Bauteilen wie etwa Halbleiterbauteilen oder Flüssigkristallmodulen. Zur Verklebung von Verklebungssubstraten aus wenig thermisch leitfähigen oder wärmeempfindlichen Materialien bietet es sich daher an, das hitzeaktiviert verklebbare Flächenelement selbst mit einem intrinsischen Mechanismus zum Heizen auszurüsten, so dass die zum Verkleben erforderliche Wärme nicht von außen eingebracht werden muss, sondern direkt im Innern des Flächenelements selber erzeugt wird. Aus dem Stand der Technik sind unterschiedliche Mechanismen bekannt, mittels derer sich ein derartiges internes Erwärmen realisieren lässt, etwa als Erwärmen mittels einer elektrischen Widerstandsheizung, durch magnetische Induktion oder infolge einer Wechselwirkung mit Mikrowellenstrahlung.

Die Erwärmung im magnetischen Wechselfeld wird zum Einen durch induzierte Wirbelströme in elektrisch leitfähigen Rezeptoren, zum Anderen - modellhaft erklärt - durch Hystereseverluste der umklappenden Elementarmagnete im Wechselfeld erreicht. Für das Ausbilden von Wirbelströmen ist allerdings eine Mindestgröße der leitfähigen Domänen erforderlich. Diese Mindestgröße steigt, je geringer die Frequenz des Wechselfeldes ist. Je nach Rezeptormaterial treten beide Effekte gemeinsam (z.B. magnetische Metalle) oder jeweils nur ein Effekt (z.B. Aluminium: nur Wirbelströme; Eisenoxidpartikel: nur Hyterese) auf.

Grundsätzlich sind verschiedene Erhitzungsvorrichtungen für eine induktive Erwärmung bekannt; diese lassen sich unter anderem nach den Frequenzen unterscheiden, die das mit der jeweiligen Erhitzungsvorrichtung erzeugte Magnet-Wechselfeld besitzt. So kann eine Induktionserwärmung unter Verwendung eines Magnetfeldes erfolgen, dessen Frequenz im Frequenzbereich von etwa 100 Hz bis etwa 200 kHz liegt (den so genannten Mittelfrequenzen; MF) oder auch im Frequenzbereich von etwa 300 kHz bis etwa 100 MHz liegt (den so genannten Hochfrequenzen; HF). Darüber hinaus sind als Sonderfall auch Erhitzungsvorrichtungen bekannt, deren Magnetfeld eine Frequenz aus dem Bereich der Mikrowellen besitzt, beispielsweise die Mikrowellen-Standardfrequenz von 2,45 GHz.

Mit der Frequenz des eingesetzten Wechselfeldes steigt der technische Aufwand, der betrieben werden muss, um das Wechselfeld zu erzeugen, und damit die Kosten für die Erhitzungsvorrichtung. Während Mittelfrequenzanlagen derzeit bereits zu einem Marktpreis von etwa 5.000 Euro erhältlich sind, sind für Hochfrequenzanlagen mindestens 25.000 Euro zu berücksichtigen. Darüber hinaus steigen auch die Sicherheitsanforderungen an die Erwärmungsanlage mit der Frequenz, so dass bei Hochfrequenzanlagen zusätzlich zu den höheren Anschaffungskosten regelmäßig auch höhere Kosten für die Installation einer solchen Anlagentechnik anfallen.

Bei der Verwendung von hohen Frequenzen zur Verklebung von Bauteilen in elektronischen Geräten können zudem unerwünschte Schädigungen elektronischer Bauteile in diesen Geräten während der Beaufschlagung mit dem elektromagnetischen Wechselfeld auftreten.

Als Anwendungsbeispiele für die Induktionserwärmung können Fertigungsprozesse aus den Bereichen Kleben, Nahtabdichten, Härten, Anlassen und Ähnlichem dienen. Die gängige Technik dabei ist, solche Verfahren anzuwenden, bei denen die Induktoren Bauteile komplett oder teilweise umfassen und über den ganzen Umfang gleichmäßig oder beim Bedarf absichtlich ungleichmäßig erwärmen, z. B. nach der EP 1 056 312 A2 oder der DE 20 2007 003 450 U1.

In der DE 20 2007 003 450 U1 wird beispielsweise auch ein Verfahren zum Verschmelzen einer Behälteröffnung mit einer Siegelfolie dargestellt, bei dem die metallische Einlage einer Siegelfolie mittels Induktion erwärmt wird und durch Wärmeleitung ein Siegelkleber aufgeschmolzen wird. Die Behälter sind durch einen aufschraubbaren oder einrastbaren Deckel verschlossen, der eine Metallfolie und eine benachbart angeordnete Kunststoff-Siegelfolie enthält. Mit Hilfe der Induktionsspule werden in der Metallfolie Wirbelströme erzeugt, welche die Metallfolie erwärmen. Durch den Kontakt zwischen Metall- und Siegelfolie wird auch die Siegelfolie erwärmt und dadurch mit der Behälteröffnung verschmolzen. Tunnelförmige Induktionsspulen weisen gegenüber flachen Spulen den Vorteil auf, dass auch Behälter mit einem großen Abstand zwischen der Metallfolie und der Deckeloberkante versiegelt werden können, da die Spule von der Seite auf die Metallfolie einwirkt.

Nachteilig an diesem Verfahren ist, dass ein wesentlich größerer Teil des Bauteilvolumens als das reine Klebervolumen und die Metallfolie durch das elektromagnetische Feld geführt wird und somit im Falle eines elektronischen Bauteils Schädigungen nicht ausgeschlossen sind, da an unerwünschten Stellen Erwärmungen auftreten können. Weiterhin nachteilig ist, dass die gesamte Deckefolie aufgeheizt wird, wobei für die Verklebung nur der im Kontakt mit dem Behälter stehende Randbereich ausreichend wäre. Somit ergibt sich ein großes Verhältnis von aufgeheizter Fläche zu Verklebungsfläche, welches für typische Getränkeflaschen mit einem Öffnungsdurchmesser von 25 mm und einer Verklebungsbreite von 2 mm etwa bei 6,5 liegt. Für größere Behälterdurchmesser bei in der Regel gleich bleibender Verklebungsbreite erhöht sich das Verhältnis.

In den letzten Jahren sind für das induktive Erwärmen insbesondere beim Verkleben von Kunststoff auf Kunststoff induktiv erwärmbare hitzeaktivierbare Klebefolien (HAFs) erneut in das Zentrum der Aufmerksamkeit gerückt. Der Grund hierfür ist den nunmehr verfügbaren nanopartikulären Systemen wie zum Beispiel MagSilica™ (Evonik AG) zu suchen, die in das Material des zu erwärmenden Körper eingearbeitet werden können und so ein Erwärmen des Körpers über sein gesamtes Volumen ermöglichen, ohne dass dessen mechanische Stabilität dadurch in nennenswerter Weise beeinträchtigt wird.

Aufgrund der geringen Größe dieser nanoskopischen Systeme ist es jedoch nicht möglich, derartige Produkte in Magnet-Wechselfeldern mit Frequenzen aus dem Mittelfrequenzbereich effizient zu erwärmen. Vielmehr sind für die neuartigen Systeme Frequenzen aus dem Hochfrequenzbereich erforderlich. Grade bei diesen Frequenzen tritt jedoch das Problem einer Beschädigung von elektronischen Bauteilen im Magnet-Wechselfeld besonders stark zutage. Die Erzeugung von Magnet-Wechselfeldern mit Frequenzen im Hochfrequenzbereich erfordert überdies einen erhöhten apparativen Aufwand und ist somit ökonomisch ungünstig. Zudem ist die Verwendung von nanopartikulären Füllstoffen auch in ökologischer Hinsicht problematisch, da sich diese bei einem späteren Recycling kaum von den umgebenden Materialien abtrennen lassen. Darüber hinaus ist es nur schwer möglich, diese Partikel in sehr dünnen Filmen einzusetzen, da infolge der starken Neigung nanopartikulärer Systeme zur Agglomeratbildung die hiermit erzeugten Filme zumeist stark inhomogen sind.

Weiterhin und zur Vermeidung der vorstehenden Problematik können hitzeaktivierbare Folien (HAFs), die induktiv erwärmbar sein sollen, mit metallischen oder metallisierten Flächengebilden gefüllt sein. Dies ist bei der Verwendung von vollflächigen Metallfolien auch im Mittelfrequenzbereich sehr effizient, hohe Erwärmungsraten können erreicht werden, so dass Induktionszeiten zwischen 0,05 und 10 s realisiert werden können. Dabei ist auch die Verwendung von sehr dünnen leitfähigen Folien zwischen 0,25 µm und 75 µm möglich.

Bekannt ist auch der Einsatz von durchbrochenen Metallfolien, Drahtnetzen, Streckmetall, Metallvliesen oder Fasern, durch die das Matrixmaterial der HAF hindurchdringen kann, so dass die Kohäsion des Verbunds verbessert wird. Die Effizienz der Erwärmung nimmt dadurch allerdings ab.

Für Verklebungen innerhalb mobiler elektronischer Geräte ist das mit induktiv erwärmbaren Nanopartikeln ausgestattete Produkt Duolplocoll RCD der Firma Lohmann bekannt. Dieses ist ausschließlich im Hochfrequenzbereich technisch nutzbar zu erwärmen. Die oben beschriebenen Nachteile der Verwendung von Partikeln und hochfrequenten Wechselfeldern treffen auch auf dieses Produkt zu.

Aufgabe der Erfindung ist es, ein hitzeaktivierbares Flächenelement zur Verfügung zu stellen, mit dem Verklebungen, insbesondere Kunststoff-Kunststoff-Verklebungen, mit sehr guter Klebefestigkeit realisiert werden können. Die Flächenelemente sollen vorteilhaft mittels Induktionserwärmung mit hohen Taktraten, insbesondere unter Vermeidung der Nachteile des Standes der Technik, verklebbar sein.
Insbesondere für den Einsatz in elektronischen Geräten sollte das Flächenelement in der Richtung senkrecht zur Verklebungsebene, also senkrecht zur (mittleren) Flächenausdehnung des Flächenelementes, eine hohe Durchschlagfestigkeit besitzen.

Als Lösung der Aufgabe wird ein hitzeaktivierbares Klebeband insbesondere für hochfeste Verklebungen von Kunststoff auf Kunststoff, angeboten, umfassend zumindest ein induktiv erwärmbares Material sowie zumindest eine hitzeaktivierbare Klebemasse, wobei die hitzeaktivierbare Klebemasse in der Richtung senkrecht zur (mittleren) Flächenausdehnung des Flächenelementes (im Folgenden auch als "z-Richtung" bezeichnet) eine hohe Wärmeleitfähigkeit aufweist. Es ist sehr vorteilhaft, wenn die elektrische Leitfähigkeit in z-Richtung Null ist, um die Durchschlagfestigkeit zu erhalten.
Die Aufgabe wird erfindungsgemäß insbesondere gelöst durch ein hitzeaktiviert verklebbares Flächenelement, umfassend zumindest eine hitzeaktivierbare Klebemasse, zumindest ein induktiv erwärmbares Material sowie zumindest einen wärmeleitfähigen Füllstoff (auch als "thermisch leitfähiges Additiv" bezeichnet), wobei das Material des Füllstoffs eine Wärmeleitfähigkeit von mindestens 0,5 W/(m*K) aufweist und elektrisch nichtleitend ist und die elektrische Leitfähigkeit des Flächenelements in Richtung senkrecht dessen mittlerer Flächenausdehnung Null ist. Der wärmeleitfähige Füllstoff ist ein Additiv, das innerhalb der Schicht der hitzeaktivierbaren Haftklebemasse eine Wärmeleitfähigkeit hervorruft; insbesondere in z-Richtung. Vorteilhaft ist der wärmeleitfähige Füllstoff ganz oder zumindest teilweise aus einem Material, welches eine gute Wärmeleitfähigkeit (thermische Leitfähigkeit) aufweist. Vorteilhaft weist das hitzeaktiviert verklebbare Flächenelement in z-Richtung eine Wärmeleitfähigkeit von mindestens 0,4 W/(m*K), insbesondere von mehr als 0,8 W/(m*K) auf. In einer vorteilhaften Vorgehensweise wird der wärmeleitfähige Füllstoff derart ausgewählt und/oder in einer derartigen Menge zugesetzt, dass die hitzeaktivierbare Klebmasse in der z-Richtung eine Wärmeleitfähigkeit von mindestens 0,4 W/(m*K), insbesondere von mehr als 0,8 W/(m*K) aufweist.
Vorteilhaft weist das Material des wärmeleitfähigen Füllstoffs eine Wärmeleitfähigkeit von mehr als 0,5 W/(m*K), bevorzugt von mehr als 5 W/(m*K), besonders bevorzugt von mehr als 10 W/(m*K) auf. Mit zunehmender Wärmeleitfähigkeit des Additivs kann die zugesetzte Menge zur Erzielung einer bestimmten Wärme verringert werden, wodurch die Klebfähigkeit der Klebmasse weniger beeinträchtigt wird.
Sehr bevorzugt wird das thermisch leitfähige Additiv derart ausgewählt, dass es elektrisch nicht leitend oder elektrisch nur sehr gering leitend ist. So kommt man zu hoher Wärmeleitfähigkeit des Flächenelementes bei gleichzeitigem Erhalt der Durchschlagfestigkeit.
Insbesondere vorteilhaft handelt es sich um ein doppelseitig hitzeaktiviert verklebbares Flächenelement.

Überraschend wurde gefunden, dass die Verklebungsfestigkeiten der erfindungsgemäßen Flächenelemente größer sind als bei vergleichbaren Flächenelementen, die keine Additive aufweisen und/oder dem Wärmeleitfähigkeitswert nicht genügen. Durch gute Wärmeableitung vom induktiv erwärmbaren Material, insbesondere von der elektrisch leitenden Schicht, ist die Gefahr lokaler Überhitzungen geringer, und es können größere Aufheizraten angewendet werden.

Für Klebmassen mit einer Wärmeleitfähigkeit im Bereich von 0,4 bis 0,8 W/(m*K) wurde ein guter Kompromiss zwischen Klebfestigkeit und notwendigem Füllstoffgehalt gefunden. Bei Klebmassen mit Wärmeleitfähigkeiten von 0,8 W/(m*K) oder mehr führt die hohe Wärmeleitfähigkeit zur besonders guten Wärmeverteilung, so dass hier die oben beschriebenen Nachteile, insbesondere aufgrund lokaler Erhitzung, besonders gut vermieden werden können.

### Hitzeaktivierbare Klebemassen

Als die zumindest eine hitzeaktiviert verklebende Klebemasse können grundsätzlich alle üblichen hitzeaktiviert verklebenden Klebemassensysteme zum Einsatz gelangen. Hitzeaktiviert verklebende Klebemassen lassen sich grundsätzlich in zwei Kategorien einordnen: thermoplastische hitzeaktiviert verklebende Klebemassen (Schmelzklebstoffe) und reaktive hitzeaktiviert verklebende Klebemassen (Reaktivklebstoffe). Diese Einteilung enthält auch solche Klebemassen, die sich beiden Kategorien zuordnen lassen, nämlich reaktive thermoplastische hitzeaktiviert verklebende Klebemassen (reaktive Schmelzklebstoffe).

Thermoplastische Klebemassen basieren auf Polymeren, die bei einem Erwärmen reversibel erweichen und während des Erkaltens wieder erstarren. Im Gegensatz dazu enthalten reaktive hitzeaktiviert verklebende Klebemassen reaktive Komponenten. Letztere Bestandteile werden auch als "Reaktivharze" bezeichnet, in denen durch das Erwärmen ein Vernetzungsprozess eingeleitet wird, der nach Beendigen der Vernetzungsreaktion eine dauerhafte stabile Verbindung auch unter Druck gewährleistet. Bevorzugt enthalten derartige thermoplastische Klebemassen auch elastische Komponenten, zum Beispiel synthetische Nitrilkautschuke. Derartige elastische Komponenten verleihen der hitzeaktiviert verklebenden Klebemasse infolge ihrer hohen Fließviskosität eine auch unter Druck besonders hohe Dimensionsstabilität.

Im Folgenden sind rein exemplarisch einige typische Systeme hitzeaktiviert verklebender Klebemassen beschrieben, die sich im Zusammenhang mit der vorliegenden Erfindung als besonders vorteilhaft herausgestellt haben.

Eine thermoplastische hitzeaktiviert verklebende Klebemasse enthält also ein thermoplastisches Basispolymer. Dieses weist bereits bei geringem Anpressdruck ein gutes Fließverhalten auf, so dass sich die für die Haltbarkeit einer dauerhaften Verklebung relevante finale Klebkraft innerhalb kurzer Anpresszeit einstellt und daher ein schnelles Verkleben auch auf rauem oder anderweitig kritischem Untergrund möglich ist. Als thermoplastische hitzeaktiviert verklebende Klebemassen können alle aus dem Stand der Technik bekannten thermoplastischen Klebemassen verwendet werden.

Geeignet sind beispielsweise solche hitzeaktivierbaren Klebemassen, wie sie in der DE 10 2006 042 816 A1 beschrieben sind, ohne sich durch diese Angaben beschränken zu wollen.

Exemplarische Zusammensetzungen sind etwa in EP 1 475 424 A1 beschrieben. So kann die thermoplastische Klebemasse beispielsweise eine oder mehrere der folgenden Komponenten enthalten oder sogar aus diesen bestehen: Polyolefine, EthylenVinylacetat-Copolymere, Ethylen-Ethylacrylat-Copolymere, Polyamide, Polyester, Polyurethane oder Butadien-Styrol-Blockcopolymere. Bevorzugt kommen etwa die in Absatz [0027] von EP 1 475 424 A1 aufgeführten thermoplastischen Klebemassen zum Einsatz. Weitere thermoplastische Klebemassen, die insbesondere für spezielle Einsatzgebiete wie zum Beispiel das Verkleben von Verklebungssubstraten aus Glas besonders geeignet sind, sind in EP 1 95 60 63 A2 beschrieben. Bevorzugt werden thermoplastische Klebemassen verwendet, deren Schmelzviskosität durch rheologische Additive heraufgesetzt ist, beispielsweise durch Zusatz von pyrogenen Kieselsäuren, Ruß, Kohlenstoff-Nanoröhren und/oder weiteren Polymeren als Abmischkomponenten.

Eine reaktive hitzeaktiviert verklebende Klebemasse weist hingegen vorteilhafterweise ein elastomeres Basispolymer und ein Modifikationsharz auf, wobei das Modifikationsharz ein Klebharz und/oder ein Reaktivharz umfasst. Infolge der Verwendung eines elastomeren Basispolymers ist es möglich, Klebeschichten mit hervorragender Dimensionsstabilität zu erhalten. Als reaktive hitzeaktiviert verklebende Klebemassen können entsprechend den jeweiligen konkreten Anwendungen alle aus dem Stand der Technik bekannten hitzeaktiviert verklebenden Klebemassen eingesetzt werden.

Dies beinhaltet zum Beispiel auch reaktive hitzeaktiviert verklebende Folien auf Basis von Nitrilkautschuken oder deren Derivaten wie etwa Nitrilbutadienkautschuke oder Mischungen (Blends) dieser Basispolymere, die zusätzlich Reaktivharze wie etwa Phenolharze enthalten; ein derartiges Produkt ist etwa unter der Bezeichnung tesa 8401 kommerziell erhältlich. Der Nitrilkautschuk verleiht der hitzeaktiviert verklebenden Folie infolge seiner hohen Fliessviskosität eine ausgeprägte Dimensionsstabilität, wodurch sich nach Durchführen einer Vernetzungsreaktion hohe Klebkräfte auf Kunststoffoberflächen realisieren lassen.

Natürlich lassen sich auch andere reaktive hitzeaktiviert verklebende Klebemassen einsetzen wie etwa Klebemassen, die zu einem Masseanteil von 50 bis 95 Gew.-% ein verklebbares Polymer und zu einem Masseanteil von 5 bis 50 Gew.-% ein Epoxidharz oder eine Mischung aus mehreren Epoxidharzen enthalten. Das verklebbare Polymer enthält hierbei vorteilhafterweise zu 40 bis 94 Gew.-% Acrylsäureverbindungen und/oder Methacrylsäureverbindungen der allgemeinen Formel CH₂=C(R¹)(COOR²) (R¹ stellt hierbei einen Rest dar, der ausgewählt ist aus der Gruppe umfassend H und CH₃, und R² stellt einen Rest dar, der ausgewählt ist aus der Gruppe umfassend H und lineare oder verzweigte Alkylketten mit 1 bis 30 Kohlenstoffatomen), zu 5 bis 30 Gew.-% ein erstes copolymerisierbares Vinylmonomer, das zumindest eine Säuregruppe aufweist, insbesondere eine Carbonsäuregruppe und/oder Sulfonsäuregruppe und/oder Phosphonsäuregruppe, zu 1 bis 10 Gew.-% ein zweites copolymerisierbares Vinylmonomer, das zumindest eine Epoxidgruppe oder eine Säureanhydridfunktion aufweist, und zu 0 bis 20 Gew.-% ein drittes copolymerisierbares Vinylmonomer, das zumindest eine funktionelle Gruppe aufweist, die sich von der funktionellen Gruppe des ersten copolymerisierbaren Vinylmonomers und von der funktionellen Gruppe des zweiten copolymerisierbaren Vinylmonomers unterscheidet. Eine derartige Klebemasse ermöglicht ein Verkleben mit einer schnellen Aktivierung, bei der innerhalb kurzer Zeit bereits die finale Klebkraft erreicht wird, so dass hierdurch insgesamt eine gut haftende Verbindung auf unpolarem Untergrund gewährleistet ist.

Eine weitere einsetzbare reaktive hitzeaktiviert verklebende Klebemasse, die besondere Vorteile bietet, enthält zu 40 bis 98 Gew.-% ein acrylathaltiges Blockcopolymer, zu 2 bis 50 Gew.-% eine Harzkomponente und zu 0 bis 10 Gew.-% eine Härterkomponente. Die Harzkomponente enthält eines oder mehrere Harze, die gewählt werden aus der Gruppe umfassend die Klebkraft steigernde (klebrigmachende) Epoxidharze, Novolakharze und Phenolharze. Die Härterkomponente wird zum Vernetzen der Harze aus der Harzkomponente eingesetzt. Eine derartige Formulierung bietet infolge der starken physikalischen Vernetzung innerhalb des Polymers den besonderen Vorteil, dass sich Klebeschichten mit einer größeren Gesamtdicke erhalten lassen, ohne dass dabei die Belastbarkeit der Verklebung insgesamt beeinträchtigt wird. Dadurch sind diese Klebeschichten besonders geeignet, Unebenheiten im Untergrund auszugleichen. Überdies weist eine solche Klebemasse eine gute Alterungsbeständigkeit und ein nur geringes Ausgasungsverhalten auf, was bei vielen Verklebungen im Elektronikbereich besonders erwünscht ist.

Wie bereits vorstehend erwähnt, lassen sich außer diesen besonders vorteilhaften Klebemassen jedoch grundsätzlich auch alle anderen hitzeaktiviert verklebenden Klebemassen entsprechend dem jeweiligen Anforderungsprofil für die Verklebung auswählen und einsetzen.

### Wärmeleitfähiger Füllstoff

Der wärmeleitfähige Füllstoff wird bevorzugt in einer Modifikation zugesetzt, die eine gute Verteilung innerhalb der Klebemasse ermöglicht, also insbesondere in Form (insbesondere feinverteilter) Partikel ("Füllstoffpartikel") oder Körper.

So lassen sich als wärmeleitfähiger Füllstoff beispielsweise Kohlenstofffasern einsetzen, insbesondere solche, wie sie die EP 456 428 A2 beschreibt. Derartige Kohlenstofffasern können vorteilhaft in einer Menge von 20 bis 60 Gew.-%, bezogen auf die Klebemasse mit Fasern, eingesetzt werden.

Als wärmeleitfähiger Füllstoff wird bevorzugt ein solcher eingesetzt, der Partikel umfasst oder aus Partikeln besteht, die aus Primärteilchen aufgebaut sind und die eine massebezogene spezifische Oberfläche von 1,3 m²/g oder weniger aufweisen. Es wurde insbesondere bei derartigen partikulären Additiven mit spezifischen Oberflächen von weniger als 1,3 m²/g beobachtet, dass diese eine deutlich höhere Wärmeleitfähigkeit in der hitzeaktivierbaren Klebmasse zur Folge haben als partikuläre Additive aus demselben Material, die jedoch eine größere Oberfläche aufweisen.
Es wäre normalerweise hingegen zu erwarten gewesen, dass die Wärmeleitfähigkeit der Klebmasse mit der spezifischen Oberfläche des wärmeleitfähigen Additivs zunimmt, da eine größere Oberfläche eine größere Wärmeübertragungsfläche zur Folge haben sollte, so dass ein verbesserter Wärmeübergang vom Matrixpolymer zum Wärmeleitadditiv anzunehmen wäre.

Versuche hierzu haben jedoch gezeigt, dass eine derartige stark thermisch leitfähige Wärmeleitungszusammensetzung erst dann einen hinreichend hohen inneren Zusammenhalt besitzt, wenn die einzelnen Additivpartikel zusätzlich als Anhäufungen einzelner Primärteilchen ausgebildet sind und somit eine unregelmäßig geformte Oberfläche aufweisen, die nicht glatt ist. Erst bei einer solchen räumlichen Struktur der Partikel sind diese strukturell in der Polymermatrix derart fest verankert, dass die entstehende Wärmeleitungszusammensetzung insgesamt eine hohe Kohäsion aufweist und diese auch bei höheren Temperaturen unter mechanischer Belastung nicht verliert.

Hierbei hat es sich insbesondere als vorteilhaft herausgestellt, wenn die Primärteilchen einen mittleren Durchmesser von mindestens 1 µm aufweisen oder sogar von mehr als 2 µm, da auf diese Weise gut thermisch leitfähige Klebmasse erhalten werden, deren Kohäsion sogar bei hohen Temperaturen, bei der die Viskosität der Polymermatrix abnimmt, noch hoch genug ist, um insgesamt einen stabilen Zusammenhalt zu gewährleisten.

Dabei können besonders hohe Wärmeleitfähigkeiten der Klebmasse erreicht werden, wenn die Partikel des thermisch leitfähigen Additivs eine noch geringere massebezogene spezifische Oberfläche von höchstens 1,0 m²/g aufweisen.

In einer vorteilhaften Ausgestaltungsform umfasst der thermisch leitfähige Additiv zumindest im Wesentlichen Aluminiumoxidpartikel und/oder Bornitridpartikel oder besteht aus diesen. Besonders bevorzugt werden solche Aluminiumoxidpartikel und/oder Bornitridpartikel eingesetzt, die aus Primärteilchen aufgebaut sind und die eine massebezogene spezifische Oberfläche von 1,3 m²/g oder weniger aufweisen.

Infolge der Verwendung solcher inerten Additive wie Aluminiumoxidpartikel und/oder Bornitridpartikel werden chemisch hochbeständige Klebmassen erhalten, die zudem unter ökonomischen wie auch unter ökologischen Gesichtspunkten vorteilhaft sind, da diese Materialien leicht verfügbar und dabei nicht toxisch sind und gegenüber anderen möglichen Additiven einen guten Kompromiss hinsichtlich hoher Wärmeleitfähigkeit bei gleichzeitig niedrigen Kosten bieten.

Für den Fall, dass der Additiv Aluminiumoxid enthält oder ist, hat es sich als besonders günstig erwiesen, wenn die Aluminiumoxidpartikel zu einem Anteil von mehr als 95 Gew.-% aus alpha-Aluminiumoxid bestehen, insbesondere zu einem Anteil von 97 Gew.-% oder mehr. Auf diese Weise ist es möglich, eine vorzeitige Vernetzung oder Vergelung von auf Acrylsäure oder Methacrylsäure oder deren Estern basierenden Polymerkomponenten innerhalb der Klebmasse zu vermeiden, die bereits im Mischaggregat auftreten kann und einen starken Anstieg der Viskosität zur Folge hat. Bei Berücksichtigung eines hohen alpha-Aluminiumoxidanteils bleiben die entstehenden Mischungen auch weiterhin hervorragend verarbeitbar. Im Gegensatz dazu wurde für auf Estern der Acrylsäure oder Methacrylsäure basierende Polymere gefunden, dass wenn der Anteil von gamma- Aluminiumoxid oder beta- Aluminiumoxid mindestens 5 Gew.-% ansteigt, ein Vergelen oder Vernetzen des Polymers bereits während des Einarbeitens des Additivs in die Schmelze auftritt, so dass die entstehende Klebmasse nicht mehr geformt oder als homogene Schicht aufgetragen werden kann.

Ausgehend von den Ergebnissen der experimentellen Untersuchungen wird vermutet, dass der erfindungsgemäße Effekt auf einer gegenüber beta-Aluminiumoxid und gamma-Aluminiumoxid geringeren Wechselwirkung von alpha-Aluminiumoxid mit der polymeren Phase zurückzuführen ist, so dass sich kein übergeordnetes Netzwerk aus mehreren Polymermolekülen ausbildet. Bei einem Massenanteil des gamma-Aluminiumoxids (und/oder gegebenenfalls des beta-Aluminiumoxids) von weniger als 5 Gew.-% bezogen auf die Gesamtmasse der Aluminiumoxidpartikel (entsprechend einem alpha-Aluminiumoxidgehalt von mehr als 95 Gew.-%) kann sich kein über das Klebemassevolumen perkolierendes Netzwerk ausbilden, so dass ein vollständiges Vergelen verhindert wird.

Auf diese Weise ist es möglich, eine vorzeitige Vernetzung oder Vergelung von auf Acrylsäure oder Methacrylsäure oder deren Estern basierenden Polymerkomponenten innerhalb der thermisch leitfähigen Haftklebemasse zu vermeiden, die bereits im Mischaggregat auftreten kann und einen starken Anstieg der Viskosität zur Folge hat. Bei Berücksichtigung eines hohen alpha-Aluminiumoxidanteils bleiben die entstehenden Mischungen auch weiterhin hervorragend verarbeitbar.

Es gibt hierbei einige Klebemassensysteme, bei denen das Problem des Viskositätsanstiegs besonders groß ist, da es in diesen besonders leicht zu einem Vergelen der Polymermatrix kommt. Aus diesem Grund hat sich für derartige leicht vergelende Klebemassen die Anwendung des erfindungsgemäßen Konzepts als besonders vorteilhaft herausgestellt.

So ist das nachträgliche Vergelen gerade bei Polymeren problematisch, die freie Säuregruppen oder freie Hydroxygruppen enthalten, da bei diesen die Wechselwirkung mit dem Aluminiumoxid besonders stark ist. Daher ist die vorteilhafte Wirkung der vorliegenden Erfindung bei diesen Systemen auch besonders groß.

Ein Vergelen tritt häufig ein, wenn die Polymermasse aus Monomereinheiten aufgebaut ist, die zumindest schwach sauer sind, beispielsweise Acrylate, Methacrylate, deren Ester und Derivate von diesen, insbesondere sofern diese Monomereinheiten in der Polymermasse zu einem hohen Anteil von mindestens 50 Gew.-% vorhanden sind, bezogen auf die Masse der polymeren Anteile der Klebemasse. Derartige Polymermassen kommen vornehmlich dann zum Einsatz, wenn es Klebemassen mit einer besonders hohen Viskosität zu realisieren gilt. Demzufolge ist das erfindungsgemäße Konzept auch bei hochkohäsiven Klebemassen mit derartigen Zusammensetzungen besonders günstig.

Zu einer schnell ablaufenden Gelbildung kommt es auch, wenn das Basispolymer der Polymermasse eine hohe mittlere Molekularmasse M_{W} von mindestens 500.000 g/mol aufweist, insbesondere von mehr als 1.000.000 g/mol, so dass die vorliegende Erfindung ebenfalls bei derartigen Klebemassen besonders sinnvoll ist.

Ferner ist eine Wärmeleitungszusammensetzung besonders geeignet, wenn das Material des thermisch leitfähigen Additivs eine Wärmeleitfähigkeit von mehr als 1 W/(m*K) aufweist, insbesondere von mehr als 10W/(m*K), günstigenfalls von mehr als 25 W/(m*K) oder sogar von mehr als 100 W/(m*K). Auf diese Weise ist gewährleistet, dass die Wärmeleitungszusammensetzung bereits bei einem niedrigen Additivgehalt eine hohe Wärmeübertragung ermöglicht. Daher kann der Anteil der thermisch leitfähigen Additive an der Klebmasse gering gehalten werden, wodurch es möglich ist, hochkohäsive Klebmassen zu realisieren.

Dabei ist es insbesondere zweckmäßig, wenn der thermisch leitfähige Additiv in der Klebmasse zu einem Anteil von mindestens 5 Vol.-% und höchstens 70 Vol.-% vorliegt, insbesondere zu mindestens 15 Vol.-% und höchstens 50 Vol.-%, jeweils bezogen auf das Volumen des thermisch leitfähigen Additivs in der Klebmasse. Im Falle von Aluminiumoxidpartikeln ist es sehr von Vorteil, wenn diese in der hochkohäsiven thermisch leitfähigen Klebemasse zu einem Anteil von mindestens 20 Gew.-% und höchstens 90 Gew.-% vorliegen, bezogen auf die Masse der Aluminiumoxidpartikel in der Haftklebemasse. Für Aluminiumoxidpartikel stellt ein Gehalt von 40 Gew.-% bis 80 Gew.-% einen besonders guten Kompromiss dar.
Mit den vorgenannten Additivmengen ist sichergestellt, dass die Wärmeleitungszusammensetzung insgesamt einen zügigen Wärmetransport von der Wärmequelle zu der Wärmesenke ermöglicht. Dies ist einerseits auf die hohe Wärmeleitfähigkeit derartiger Klebmassen zurückzuführen, andererseits aber auch einem unter diesen Bedingungen hinreichend hohen inneren Zusammenhalt der Polymermatrix geschuldet, der auch unter mechanischer Belastung einen verlässlichen thermischen Kontakt zu den Oberflächen der Wärmequelle und der Wärmesenke bietet.
Daneben können jedoch auch solche thermisch leitfähigen Klebemassen vorteilhaft sein, die Aluminiumoxidpartikel zu einem Anteil von mindestens 20 Gew.-% und höchstens 40 Gew.-% enthalten, nämlich wenn Klebemassen mit besonders hoher Verklebungsleistung realisiert werden sollen, oder solche, die Aluminiumoxidpartikel zu einem Anteil von mindestens 80 Gew.-% und höchstens 90 Gew.-% enthalten, nämlich dann, wenn eine besonders hohe Wärmeleitfähigkeit gefordert ist.

Darüber hinaus ist es von Vorteil, wenn die Partikel einen mittleren Durchmesser aus einem Bereich von 2 µm bis 500 µm aufweisen, insbesondere aus einem Bereich von 2 µm bis 200 µm oder sogar aus einem Bereich von 40 µm bis 150 µm. Infolge dieser Ausbildung des Additives wird der thermische Kontakt zu der Wärmquelle und der Wärmesenke sogar noch weiter verbessert, da die Partikel einerseits hinreichend klein sind, um sich der Form der Oberfläche der Wärmquelle und der Wärmesenke exakt anzupassen, andererseits aber auch hinreichend groß, um eine hohe Wärmeleitfähigkeit zu erreichen, ohne dass der innere Zusammenhalt der Wärmeleitungszusammensetzung insgesamt beeinträchtigt wird.

### Induktiv erwärmbares Material

Als induktiv erwärmbares Material können sowohl Flächengebilde (insbesondere elektrisch leitfähige Schichten) wie auch partikuläre Materialien (Partikel) eingesetzt werden, wie sie aus dem Stand der Technik an sich hierfür bekannt sind. Im Falle von leitfähigen Partikeln tritt bei Erzeugung eines Feldes zur Erwärmung allerdings wieder Migration auf, so dass das Problem der erhöhten Durchschlagfestigkeit wieder aktuell wird.

Als elektrisch leitende Schicht wird jede Schicht aus mindestens einem Material angesehen, das bei einer Temperatur von 23 °C eine Leitfähigkeit (Elektronen und/oder Löcher) von mindestens 1 mS/m aufweist, so dass in diesem ein elektrischer Stromfluss auftreten kann. Dies sind insbesondere Metalle, Halbmetalle sowie andere metallische Materialien und gegebenenfalls auch Halbleiter, in denen der elektrische Widerstand gering ist. Damit ist der elektrische Widerstand der elektrisch leitenden Schicht also einerseits hoch genug, um beim Fließen eines elektrischen Stroms in der Schicht eine Erwärmung der Schicht zu ermöglichen, andererseits aber auch niedrig genug, um einen Stromfluss durch die Schicht überhaupt zu etablieren. Als Sonderfall sind als elektrisch leitende Schichten auch Schichten aus Materialien anzusehen, die einen niedrigen magnetischen Widerstand aufweisen (und somit eine hohe magnetische Leitfähigkeit oder magnetische Permeabilität), beispielsweise Ferrite, obgleich diese häufig einen bei Wechselstrom niedriger Frequenzen höheren elektrischen Widerstand aufweisen, so dass hier eine Erwärmung häufig erst bei tendenziell höheren Magnet-Wechselfeldfrequenzen erreicht wird.

Bevorzugt werden zum Beispiel elektrisch leitfähige flächige Materialien (Flächengebilde) eingesetzt, da diese mit niedrigen Frequenzen erwärmt werden können, was eine höhere Eindringtiefe des Magnetfelds sowie geringere Anlagenkosten zur Folge hat. Bevorzugt haben diese elektrisch leitfähigen Flächengebilde eine Dicke von wenige als 100 µm, insbesondere weniger als 50 µm und ganz besonders weniger als 20 µm, da die Klebebänder mit abnehmender Dicke des elektrisch leitenden Flächengebildes flexibler werden und insbesondere bei sehr geringen Dicken eine ausreichende Durchschlagfestigkeit erhalten.

Das hitzeaktiviert erwärmbare Material ist daher insbesondere vorteilhaft ein elektrisch leitfähiges Flächengebildes, insbesondere eine elektrisch leitfähige Schicht. Diese werden mindestens einseitig, insbesondere von beiden Seiten mit dem hitzeaktivierbaren, erfindungsgemäß modifizierten Klebstoff beschichtet. Hierdurch wird eine hervorragende Durchschlagfestigkeit erzielt.

In einer vorteilhaften Ausgestaltungsform weist die elektrisch leitende Schicht des hitzeaktiviert verklebbaren Flächenelements eine Schichtdicke von weniger als 20 µm auf, insbesondere von weniger als 10 µm, um dessen Aufheizgeschwindigkeit auf besonders einfache Weise zu begrenzen. Darüber hinaus kann das Flächenelement eine weitere hitzeaktiviert verklebende Klebemassenschicht aufweisen. Ein derartiges Flächenelement ist als zweiseitig verklebbares Flächenelement besonders geeignet, um zwei Verklebungssubstrate miteinander zu verbinden.

Bevorzugt ist die elektrisch leitende Schicht dabei zusätzlich auch magnetisch, insbesondere ferromagnetisch oder paramagnetisch. Wenngleich für derartige Materialien erwartet wurde, dass in diesen zusätzlich zu einer Induktion von Wirbelströmen auch eine Erwärmung durch Hystereseverluste auftritt und die Erwärmungsgeschwindigkeit insgesamt größer ausfällt, so wurde hingegen beobachtet, dass selbst magnetische Materialien wie Nickel oder magnetische Stähle, die den elektrischen Strom gut leiten, durchweg geringere Erwärmungsgeschwindigkeiten haben als Materialien, die zwar den elektrischen Strom sehr gut leiten, selbst aber nicht magnetisch sind, beispielsweise Kupfer oder Aluminium. Daher lässt sich durch Verwendung von magnetischen, den elektrischen Strom leitenden Materialien die Erwärmung leichter kontrollieren und das Auftreten von Erwärmungseffekten abseits der Klebefuge vermindern.

Ferner ist es günstig, wenn die elektrisch leitende Schicht eine elektrische Leitfähigkeit von mehr als 20 MS/m aufweist (was beispielsweise durch Verwendung von Aluminium erreicht werden kann), insbesondere von mehr als 40 MS/m (was beispielsweise durch Verwendung von Kupfer oder Silber erreicht werden kann), jeweils bestimmt für 300 K. Auf diese Weise lassen sich die zur Herstellung hoher Festigkeiten der Klebverbindung erforderlichen ausreichend hohen Temperaturen in der Klebefuge sowie eine homogene Durchwärmung auch in sehr dünnen Flächenelementen realisieren. Überraschenderweise wurde beobachtet, dass die Erwärmung infolge induzierter Wirbelströme mit der zunehmenden Leitfähigkeit steigt und nicht, wie erwartet, mit zunehmendem elektrischem Widerstand.

### Flächenelement-Aufbauten

Als Flächenelement im Sinne dieser Anmeldung gelten insbesondere alle üblichen und geeigneten Gebilde mit im Wesentlichen flächenförmiger Ausdehnung. Diese ermöglichen eine flächige Verklebung und können verschieden ausgestaltet sein, insbesondere flexibel, als Klebefolie, Klebeband, Klebeetikett oder als Formstanzling. Das Flächenelement kann als zugeschnittenes Flächenelement ausgebildet sein, dessen Form an die Form der Verklebungsfläche angepasst ist, um die Gefahr zu verringern, dass das Verklebungssubstrat im Verlauf der induktiven Erwärmung thermisch beschädigt wird.

Flächenelemente im Sinne dieser Anmeldung weisen jeweils zwei Seitenflächen auf, eine Vorderseite und eine Rückseite. Die Begriffe Vorderseite und Rückseite beziehen sich dabei auf die beiden Oberflächen des Flächenelements parallel zu seiner Hauptausdehnung (Flächenausdehnung, Hauptausdehnungsebene) und dienen lediglich der Unterscheidung dieser beiden auf gegenüberliegenden Seiten des Flächenelements angeordneten Flächen, ohne dass durch die Wahl der Begriffe die absolute räumliche Anordnung der beiden Flächen festgelegt ist; demzufolge kann die Vorderseite auch die räumlich hinten gelegene Seitenfläche des Flächenelements darstellen, nämlich wenn dementsprechend die Rückseite dessen räumlich vorne gelegene Seitenfläche bildet.

Dieses hitzeaktiviert verklebbare Flächenelement soll auf einem Verklebungssubstrat verklebt werden. Dafür weist das Flächenelement an zumindest einer seiner beiden Seitenflächen eine hitzeaktiviert verklebende Klebemasse auf, bevorzugt sogar an beiden Seitenflächen. Hitzeaktiviert verklebende Klebemassen sind alle Klebemassen, die bei erhöhten Temperaturen heiß verklebt werden und nach dem Erkalten eine mechanisch belastbare Verbindung bieten. Üblicherweise liegt die Klebemasse in Form einer Klebemassenschicht vor.

Als Schicht wird insbesondere eine flächenförmige Anordnung eines Systems einheitlicher Funktionalität bezeichnet, deren Abmessungen in einer Raumrichtung (Dicke oder Höhe) signifikant kleiner sind als in den beiden anderen Raumrichtungen, die die Hauptausdehnung definieren (Länge und Breite). Eine derartige Schicht kann kompakt oder auch durchbrochen ausgebildet sein und aus einem einzigen Material oder aus unterschiedlichen Materialien bestehen, insbesondere, wenn diese zur einheitlichen Funktionalität dieser Schicht beitragen. Eine Schicht kann eine über ihre gesamte Flächenausdehnung konstante Dicke aufweisen oder aber unterschiedliche Dicken. Darüber hinaus kann eine Schicht natürlich auch mehr als eine einzige Funktionalität aufweisen.

Das vorliegend zu verklebende Flächenelement enthält vorteilhaft zumindest zwei unterschiedliche Schichten, nämlich mindestens eine elektrisch leitende Schicht und mindestens eine hitzeaktiviert verklebende Klebemassenschicht.

Grundsätzlich kann die zumindest eine elektrisch leitende Schicht beliebig geeignet ausgebildet sein, beispielsweise als dünne vollflächig-kompakte oder durchbrochene Schicht (beispielsweise als Gitter). Bevorzugt beträgt die Schichtdicke der elektrisch leitenden Schicht weniger als 50 µm, insbesondere weniger als 20 µm oder sogar weniger als 10 µm. Letzteres ermöglicht es, die Aufheizgeschwindigkeit nach oben hin auf relativ einfache Weise zu begrenzen.

Die elektrisch leitende Schicht kann aus allen üblichen und geeigneten Materialien bestehen, etwa aus Aluminium, Kupfer, Gold, Nickel, Mu-Metall, Alnico, Permalloy, Ferrit, Kohlenstoff-Nanoröhren, Graphenen und dergleichen. Bevorzugt ist die elektrisch leitende Schicht dabei zusätzlich auch magnetisch, insbesondere ferromagnetisch oder paramagnetisch. Günstigerweise weist die elektrisch leitende Schicht dabei eine elektrische Leitfähigkeit von mehr als 20 MS/m auf (entsprechend einem spezifischen Widerstand von weniger als 50 mΩ·mm²/m), insbesondere von mehr als 40 MS/m (entsprechend einem spezifischen Widerstand von weniger als 25 mΩ·mm²/m), jeweils bestimmt für 300 K.

Zusätzlich zu der zumindest einen elektrisch leitenden Schicht kann das Flächenelement natürlich auch weitere elektrisch leitende Schichten aufweisen; diese können mit der zumindest einen elektrisch leitenden Schicht identisch oder von dieser verschieden sein.

Insgesamt kann das hitzeaktiviert verklebbare Flächenelement beliebig geeignet ausgebildet sein. So kann das Flächenelement zusätzlich zu den beiden zuvor beschriebenen Schichten weitere Schichten enthalten, zum Beispiel permanente Träger oder temporäre Träger. Ferner kann das Flächenelement auf lediglich einer seiner beiden Seitenflächen verklebbar oder auf beiden Seitenflächen verklebbar ausgebildet sein, etwa als einseitig verklebbares bzw. doppelseitig verklebbares Klebeband. In letzterem Fall weist das Flächenelement zumindest eine weitere Klebemassenschicht auf, wobei diese mit der zumindest einen hitzeaktiviert verklebenden Klebemasse identisch oder von dieser verschieden sein kann. Somit kann die weitere Klebemassenschicht zum Beispiel eine hitzeaktiviert verklebende Klebemasse oder sogar eine Haftklebemasse enthalten.

Zum Erreichen einer ausreichenden Durchschlagfestigkeit sollten die Schichten des hitzeaktivierbaren Kleber vorteilhaft zumindest 10 µm dick sein, bevorzugt ist eine Dicke zwischen 20 und 50 µm, um ausreichende Durchschlagfestigkeit mit hinreichender Klebefestigkeit zu garantieren. Für besonders feste Klebverbindungen ist dagegen eine Dicke von 50 - 200 µm vorteilhaft.

Eine vorteilhafte Ausführungsform des erfindungsgemäßen Flächenelementes zeichnet sich dadurch aus, dass
- das Flächenelement eine Dicke von weniger als 70 µm, insbesondere von weniger als 50 µm, ganz besonders von weniger als 30 µm aufweist,
- und/oder das elektrisch leitende flächige Material eine Dicke von weniger als 30 µm, insbesondere weniger als 20 µm, ganz besonders weniger als 15 µm aufweist,
- wobei bevorzugt nach einer Herstellung der Verklebung durch Erwärmung des Klebebands durch magnetische Induktion die Verklebungsfestikeit im statischen Scherversuch auf Polycarbonat größer als 400 Mpa ist.

Weiterhin vorteilhaft ist es, elektrisch leitfähige flächige Material von beiden Seiten mit dem hitzeaktivierbaren Klebstoff zu beschichten, um eine genügende Durchschlagfestigkeit zu gewährleisten.

### Verfahren

Gegenstand der Erfindung ist weiterhin ein Verfahren zum Verkleben eines hitzeaktiviert verklebbaren Flächenelements mit einer bestimmten Art von Verklebungssubstraten.

Die Verklebungssubstrate können dabei grundsätzlich aus jedem Material sein, welches sich mittels hitzeaktivierbarer Klebemassen verkleben lässt (insbesondere also die dabei aufzuwendenden Temperaturen übersteht). Die zu verklebenden Materialien können identisch oder verschieden sein.
Insbesondere vorteilhaft werden mit dem erfindungsgemäßen Verfahren zwei identischen oder zwei unterschiedliche Kunststoffe miteinander verklebt.

Das Verfahren ist in einer ersten Ausführung dadurch gekennzeichnet, dass ein erfindungsgemäßes Flächenelement eingesetzt wird.

Vorteilhaft ist es, die erfindungsgemäßen hitzeaktivierbaren Flächenelemente in einem Verfahren zu verwenden, bei dem diese Flächenelemente mit einer Aufheizrate von mehr als 50 °C, insbesondere von mehr als 100 °C erwärmt werden. Die erfindungsgemäßen Klebebänder sind für hohe Aufheizraten besonders geeignet, da sie aufgrund ihrer Wärmeleitfähigkeit überschüssige Wärme abzuleiten vermögen und so die Gefahr lokaler Überhitzungen gering ist (siehe oben). Durch die bessere Wärmeverteilung können also größere Aufheizraten realisiert werden.

### Verwendung

Das erfindungsgemäße Flächenelement wird bevorzugt zum Verkleben von Baueinheiten elektronischer Geräte eingesetzt, etwa solche aus dem Bereich der Konsumgüterelektronik, Unterhaltungselektronik oder Kommunikationselektronik (zum Beispiel für Mobiltelefone, PDAs, Laptops und andere Rechner, Digitalkameras und Anzeigegeräte wie etwa Displays, Digitalreader oder organische Leuchtdiodendisplays (OLEDs) sowie für Solarzellenmodule wie etwa elektrochemische Farbstoff-Solarzellen, organische Solarzellen oder Dünnschichtzellen). Als Baueinheiten werden vorliegend alle Bestandteile und Ansammlungen derselben verstanden, die in elektronischen Geräten verwendet werden, beispielsweise elektronische Bauteile (diskrete und integrierte Bauelemente), Gehäuseteile, elektronische Module, Antennen, Anzeigefelder, Schutzscheiben, unbestückte und/oder bestückte Platinen und dergleichen.

Das erfindungsgemäße Flächenelement lässt sich unter Verwendung eines zum induktiven Erwärmen üblichen Induktionsheizmittel (Induktors) durchführen. Als Induktionsheizungsmittel (Induktor) kommen alle üblichen und geeigneten Anordnungen in Frage, also etwa von einem elektrischen Wechselstrom durchflossene Spulen, Leiterschleifen oder Leiter, die infolge des hindurchfließenden Stroms ein Magnet-Wechselfeld geeigneter Stärke erzeugen. So kann die zum Erwärmen erforderliche Magnetfeldstärke durch eine Spulenanordnung von entsprechender Wicklungszahl und Spulenlänge bereitgestellt werden, die von einem entsprechenden Strom durchflossen ist, beispielsweise als Punktinduktor. Diese kann ohne ferromagnetischen Kern ausgebildet sein oder aber einen Kern aufweisen, beispielsweise aus Eisen oder gepresstem Ferritpulver. Der Vorverbund kann dem so erzeugten Magnetfeld direkt ausgesetzt sein. Alternativ ist es natürlich auch möglich, obige Spulanordnung als Primärwicklung auf der Primärseite eines Magnetfeldübertragers (Transformator) anzuordnen, auf dessen Sekundärseite eine Sekundärwicklung einen entsprechend höheren Strom bereitstellt. Dadurch kann die in der unmittelbaren Nähe des Vorverbunds angeordnete eigentliche Erregerspule infolge des höheren Stroms eine geringere Zahl an Windungen aufweisen, ohne dass dadurch die Feldstärke des Magnet-Wechselfeldes verringert wird.

Für den Fall, dass der Vorverbund während des induktiven Erwärmens mit einem Pressdruck beaufschlagt wird, ist hierfür zusätzlich eine Pressvorrichtung erforderlich. Als Pressvorrichtung können alle zum Ausüben eines Pressdrucks geeigneten Vorrichtungen eingesetzt werden, zum Beispiel diskontinuierlich arbeitende Pressmaschinen wie etwa eine Pneumatik- oder Hydraulikpresse, eine Exzenterpresse, eine Kurbelpresse, eine Kniehebelpresse, eine Spindelpresse oder dergleichen, oder auch kontinuierlich arbeitende Pressmaschinen wie etwa eine Presswalze. Die Vorrichtung kann als separate Einheit vorgesehen sein oder aber mit dem Induktor verbunden vorliegen. Bevorzugt kommt etwa eine Vorrichtung zum Einsatz, die als erstes Presswerkzeug zumindest ein Pressstempelelement enthält, das zudem ein Induktionsheizungsmittel aufweist. Dadurch kann das Induktionsfeld sehr nah an die zu bildende Verklebungsstelle herangeführt werden und somit auch räumlich auf die Fläche dieser Verklebungsstelle begrenzt werden.

### Ergebnis

Mit den erfindungsgemäßen Flächenelementen lassen sich hervorragend Verklebungen zweier Substrate miteinander, insbesondere Kunststoff-Kunststoff-Verklebungen, mittels Induktionserwärmung mit hohen Taktraten unter Vermeidung der Nachteile des Standes der Technik realisieren. Überraschend wurde gefunden, dass die Verklebungsfestigkeiten der erfindungsgemäßen Flächenelemente größer ist als bei bekannten Verklebungen mit Klebebändern nach dem Stand der Technik. Mit den erfindungsgemäßen Flächenelementen ist es möglich, die (während bei der induktiven Erwärmung entstehende) Wärme besser vom elektrisch leitenden Flächengebilde (induktiv erwärmbares Material)) und/oder von den thermisch leitfähigen Additiven abzuleiten, so dass die Gefahr lokaler Überhitzungen geringer wird und größere Aufheizraten realisiert werden können.

### Experimentelle Untersuchungen

Zur Bestimmung der Wärmeleitfähigkeit der Klebemassen mit den wärmeleitfähigen Hilfsstoffen wurde ein Verfahren nach ISO-Entwurf 22007-2 durchgeführt (Dicke der Prüfkörper: 10 mm auf beiden Seiten des flächigen Heizelements).

Die Verklebungsfestigkeit wurde im dynamischen Zugscherversuch in Anlehnung an DIN 53283 bei 23 °C und einer Prüfgeschwindigkeit von 1 mm/min ermittelt.

Die Bestimmung der elektrischen Durchschlagfestigkeit der mit den Wärmeleitungszusammensetzungen erhaltenen haftklebenden Flächenelementen erfolgte nach VDE 0100.

Folgende hitzeaktivierbare Klebemassen wurden verwendet:

| **Klebemassen-Nr.** | **Typ** | **Beschreibung** |
|---|---|---|
| **1** | tesa HAF 8400 | Nitrilkautschuk/Phenolharz |
| **2** | tesa HAF 8865/8860 | Synthesekautschuk/Epoxidharz |
| **3** | tesa HAF 8440 | Copolyamid |
| **4** | tesa HAF 8464 | Copolyester |

Folgende Füllstoffe zur Erhöhung der Wärmeleitfähigkeit wurden ausgewählt:

| **Füllstoff** | **Typ** | |
|---|---|---|
| | | Herstellerangaben (Zusammensetzungs-%-Angaben in Gew.-%) |
| **1** | Nabalox 105 Nabaltec AG, Schwandorf | Al₂O₃ 99,6 %; SiO₂ 0,02 %, Na₂O 0,3 %, Fe₂O₃ 0,03 %, Spez. Oberfläche (BET) < 1 m²/g, α-Al₂O₃-Gehalt 98 %, mittlerer Korndurchmesser 80 µm, Primärkristallgröße 2 µm, Korndurchmesser < 45 µm: ca. 20 %, Reindichte 3,9 g/cm³, Schüttdichte 950 g/m³, Schüttwinkel 50° |
| **2** | Nabalox 115-25 Nabaltec AG, Schwandorf | Al₂O₃ 99,6 %; SiO₂ 0,03 %, Na₂O 0,3 %, Fe₂O₃ 0,03 %, Spez. Oberfläche (BET) 1 m²/g, α-Al₂O₃-Gehalt 98 %, mittlerer Korndurchmesser 4 µm, Primärkristallgröße 2 µm, Reindichte 3,9 g/cm³, Schüttdichte 800 g/m³, |
| **3** | Nabalox 715-10 Nabaltec AG, Schwandorf | Al₂O₃ 99,6 %; SiO₂ 0,03 %, Na₂O 0,3 %, Fe₂O₃ 0,03 %, Spez. Oberfläche (BET) 1,6 m²/g, α-Al₂O₃-Gehalt 98 %, mittlerer Korndurchmesser 2,5 µm, Primärkristallgröße 2 µm, Schüttdichte 800 g/m³, Gründichte (100 MPa, ca. 4 % Feuchte) 2,35 g/cm³ Sinterdichte 3,65 g/cm³ Sintertemperatur 1725 °C Lineare Schwindung 13 % |
| **4** | α-Aiuminiumoxid-Nanopartikel IBU-tec advanced materials GmbH, Weimar | |
| **5** | Bornitrid Grade A 01 CeramTec AG, Plochingen | |
| **6** | Aluminiumpulver, fein; sphärische Partikel, ca. 25µm Fa. TLS Technik GmbH&Co, Bitterfeld | |

MagSilica 50-85: Nanopartikel, Fa. Evonik, Matrix: SiO₂, Magnetische Domäne Eisenoxid, Domänengehalt 80-92 Gew.-%, Oberflächengröße 40-50 m²/g, Durchmesser 82 ± 11 nm, Dichte 3,72 g/cm³, Volumenanteil Magnetite im Partikel 40 Vol-%

Folgende wärmeleitfähige Klebemassen und entsprechende Vergleichsbeispiele wurden hergestellt:

| Beispiel-Nr. | Klebemassen-Nr. | Füllstoff-Nr. | Anteil Füllstoff [Vol-%] | **λ [W/mK]** |
|---|---|---|---|---|
| 1 | 1 | 1 | 40 | 1,2 |
| 2 | 1 | 2 | 20 | 0,43 |
| 3 | 1 | 2 | 31,5 | 0,71 |
| 4 | 1 | 2 | 40 | 0,99 |
| 5 | 1 | 3 | 40 | 0,74 |
| 6 | 1 | 4 | 40 | 0,56 |
| 7 | 1 | 5 | 40 | 1,29 |
| 8 | 2 | 2 | 20 | 0,39 |
| 9 | 3 | 2 | 20 | 0,43 |
| 10 | 4 | 2 | 20 | 0,44 |
| 11 | 1 | 6 | 40 | 0,85 |
| 12 | 3 | 2 | 20 + 10 Gew.-% MagSilica 50-85 (Degussa AG, Hanau) | 0,45 |
| Vergleichsbeispiel-Nr. | | | | |
| V1 | 1 | | 0 | 0,20 |
| V2 | 2 | | 0 | 0,18 |
| V3 | 3 | | 0 | 0,22 |
| V4 | 4 | | 0 | 0,23 |
| V5 | 1 | MagSilica 50-85 | 10 Gew.-% | 0,28 |

Zur Herstellung der wärmeleitfähigen Klebemassen wurde bei den Klebemassentypen 1 und 2 das Klebeband bei Raumtemperatur in Butanon gelöst und ein Feststoffgehalt von 30 Gew.-% eingestellt. Die Füllstoffe wurden mit einem hochdrehenden Rühraggregat des Typs Ultraturrax dispergiert. Sodann wurden Klebstofffilme mittels eines Rakels ausgestrichen und getrocknet, so dass sich eine Filmdicke von etwa 100 µm ergab.

Für Beispiel 12 wurden zusätzlich zu dem wärmeleitfähigen Füllstoff noch 10 Gew.-% eines induktiv erwärmbaren Füllstoffs eingearbeitet.

Bei den Klebemassentypen 3 und 4 wurden die Füllstoffe in einem Laborkneter der Fa. Haake bei einer Temperatur von 180 °C in die Schmelze eingearbeitet. In einer Vakuumpresse wurden sodann bei einer Temperatur von 150 °C flächige Presslinge mit einer Dicke von etwa 100 µm hergestellt.

Als elektrisch leitfähiges Flächengebilde zur Induktionserwärmung wurde eine Aluminiumfolie mit der Dicke 36 µm verwendet. Die Metallfolie wurde für die Beispiele 1 - 11 und V1 - V4 beidseitig jeweils mit den Kleberschichten bei einer Temperatur von ca. 90 - 115 °C, je nach Klebersystem zusammenlaminiert. Dabei wird bei den Klebern 1 und 2 die chemische Vernetzungsreaktion noch nicht gestartet, sondern lediglich eine Haftung herbeigeführt.

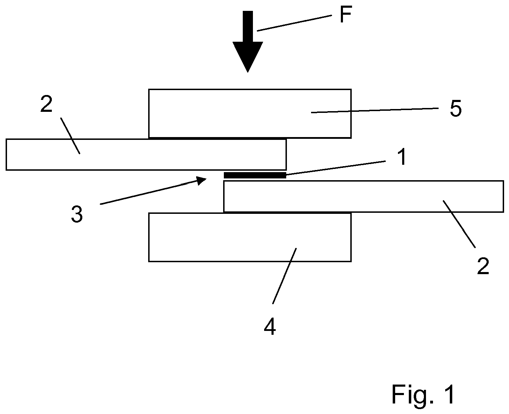

Als Verklebungssubstrate für das erfindungsgemäße Klebeband 1 wurden 2 Polycarbonatplatten 2 mit 20 mm Breite, 100 mm Länge und 3 mm Dicke verwendet, die in der Klebefuge 3 um 10 mm überlappten (vgl. Fig. 1). Die Verklebungsfläche umfasste hier also ein Rechteck von 10 x 20 mm Kantenlänge. Um das differentielle Trennen des Klebebands zu untersuchen, wurden die Fügepartner aus dem gleichen Material gewählt. In der Figur 1 sind weiterhin schematisch das untere Pressstempelelement 4, das obere Pressstempelelement 5 sowie die Kraft F dargestellt.

Das Verklebungsverfahren wurde mit Ausnahme des Beispiels 12 mit Hilfe einer modifizierten Induktionsanlage des Typs EW5F der Firma IFF GmbH, Ismaning, durchgeführt. Als Induktor zum lokalen Bereitstellen des Magnet-Wechselfeldes dient hier ein Induktionsfeldübertrager, der aus lediglich einem wassergekühlten stromdurchflossenen Leiter besteht, der als Sekundärspulenkreis eines Transformatorfeldübertragers eingesetzt wird und in einem Koaxialtransformator mit dem primärspulenseitig erzeugten Übertragerfeld in Wechselwirkung tritt. Der Induktionsfeldübertrager wurde in eine Matrix aus Polyetheretherketon (PEEK) eingebettet und die so erhaltene Anordnung als unteres Pressstempelelement 4 einer Pressvorrichtung eingesetzt, die zudem ein oberes Pressstempelelement 5 aufweist. Der Anpressdruck aufgrund der Kraft F, mit dem der Vorverbund zwischen dem unteren Pressstempelelement 4 und dem oberen Pressstempelelement 5 senkrecht zu den Seitenflächen des hitzeaktiviert verklebbaren Flächenelements beaufschlagt wurde, betrug jeweils 2 MPa.
Mit Hilfe der modifizierten Induktionsanlage wurden für die Untersuchungen Magnet-Wechselfelder einer Frequenz von 30 kHz bei einer Pulsweite von 70 % erzeugt. Die Pulsweite gibt den prozentualen Anteil der Pulsdauer (Pulslänge) des Magnet-Wechselfelds an der Gesamtperiodendauer (der Summe aus Pulsdauer und der Dauer der Pausen zwischen zwei aufeinanderfolgenden Pulsen) des Magnet-Wechselfelds an. Die Zeit, in der das hitzeaktiviert verklebbare Flächenelement dem gepulsten Magnet-Wechselfeld ausgesetzt war (also die Dauer der induktiven Erwärmung), lag in einem Bereich von 3 s bis 9 s.
Alle Versuche (mit Ausnahme des Beispiels 12) wurden zudem mit einer Nachpresszeit von 8 s durchgeführt, innerhalb derer eine induktive Nacherwärmung in einem Magnet-Wechselfeld derselben Frequenz wie beim thermischen Aktivieren der Klebemassen bei einer Pulsweite von 20 % erfolgte (entsprechend einem Verhältnis von Pulsdauer zu Pausendauer von 1 : 4).

Für Beispiel 12 wurde eine Hochfrequenzinduktionsanlage der Fa. Celes verwendet, welche mit einem 3,5-windigen Tellerinduktor bei einer Frequenz von 586 kHz arbeitete und mit einer Leistungsaufnahme von 20 kW betrieben wurde. Die Proben wurden auf dem mit einer 0,25 mm dicken Platte aus glasfaserverstärktem Kunststoff abgedeckten Tellerinduktor platziert und mit einer Gewichtskraft von etwa 20 N belastet, welche über einen Kunststoffstab auf die Fügestelle geleitet wurde.

### Ergebnisse:

Die Ergebnisse geben jeweils Mittelwerte aus fünf Versuchsklebungen wieder.

| Beispiel-Nr. | Induktionszeit [s] | Anpressdruck [MPa] | Klebfestigkeit [N/cm²] | Durchschlagfestigkeit |
|---|---|---|---|---|
| 1 | 9 | 2 | 652 | bestanden |
| 2 | 9 | 2 | 566 | bestanden |
| 3 | 9 | 2 | 585 | bestanden |
| 4 | 9 | 2 | 597 | bestanden |
| 5 | 9 | 2 | 572 | bestanden |
| 6 | 9 | 2 | 579 | bestanden |
| 7 | 9 | 2 | 636 | bestanden |
| 8 | 9 | 0,5 | 504 | bestanden |
| 9 | 3 | 0,2 | 444 | bestanden |
| 10 | 3 | 0,2 | 379 | bestanden |
| 11 | 9 | 2 | 611 | nicht bestanden |
| 12 | 10 | 0,1 | 559 | bestanden |
| Vergleichs beispiel -Nr. | | | | |
| V1: tesa HAF 8400 | 9 | 2 | 552 | bestanden |
| V2: tesa HAF 8865/8860 | 9 | 0,5 | 462 | bestanden |
| V3: tesa HAF 8440 | 2 | 0,2 | 403 | bestanden |
| V4: tesa HAF 8464 | 2 | 0,2 | 345 | bestanden |
| V5 tesa HAF 8400 + 10 Gew.-% MagSilica | | | 531 | bestanden |

Die Ergebnisse zeigen, dass durch die erhöhte Wärmeleitfähigkeit verbesserte Verklebungsfestigkeiten erreicht werden. Dies ist unerwartet, da doch zur Erhöhung der Wärmeleitfähigkeit ein großer Volumenanteil an Füllstoffen zugegeben werden muss, so dass der Fachmann erwartet, dass die Verklebungsfestigkeiten sinken.

Die Prüfung der elektrischen Durchschlagsfestigkeit nach VDE 0100 wurde ebenfalls von allen erfindungsgemäßen Proben mit Ausnahme von Versuch 11 bestanden. Hieraus ist ersichtlich, dass erfindungsgemäße Wärmeleitungszusammensetzungen elektrisch nicht leitend ausgeführt werden können und daher auch dort eingesetzt werden können, wo eine elektrische Isolierung von thermisch leitend verbundenen Komponenten gefordert ist, etwa in elektronischen Geräten. Weiterhin wird die elektrische Durchschlagfestigkeit nicht durch die innen liegende Metallfolie beeinträchtigt.

## Patentansprüche

1. Flächenelement umfassend zumindest eine hitzeaktivierbare Klebemasse, zumindest ein induktiv erwärmbares Material sowie zumindest einen wärmeleitfähigen Füllstoff, **dadurch gekennzeichnet, dass**
das Material des Füllstoffs eine Wärmeleitfähigkeit von mindestens 0,5 W/(m*K) aufweist und elektrisch nichtleitend ist und
die elektrische Leitfähigkeit des Flächenelements in Richtung senkrecht zu dessen mittlerer Flächenausdehnung Null ist.

2. Flächenelement nach einem der vorangehenden Ansprüche, **dadurch gekennzeichnet, dass**
der wärmeleitfähige Füllstoff in Form von Füllstoffpartikeln eingesetzt wird und/oder Füllstoffpartikel umfasst.

3. Flächenelement nach Anspruch 2, **dadurch gekennzeichnet, dass**
die Füllstoffpartikel Aluminiumoxidpartikel sind, die zu einem Anteil von mehr als 95 Gew.-% aus alpha-Aluminiumoxid bestehen.

4. Flächenelement nach Anspruch 3, **dadurch gekennzeichnet, dass**
der Anteil der Aluminiumoxidpartikel, bezogen auf die hitzeaktivierbare Klebemasse mit dem Füllstoff, im Bereich von 20 bis 90 Gew.-%, insbesondere im Bereich von 40 bis 80 Gew.-% liegt.

5. Flächenelement nach einem der Ansprüche 2 bis 4, **dadurch gekennzeichnet, dass**
die Füllstoffpartikel Primärteilchen mit einer massebezogenen spezifischen Oberfläche von 1,3 m² oder weniger, insbesondere von 1,0 m² oder weniger, sind.

6. Flächenelement nach einem der Ansprüche 2 bis 5, **dadurch gekennzeichnet, dass**
der Anteil der Primärteilchen, bezogen auf die hitzeaktivierbare Klebemasse mit dem Füllstoff, im Bereich von 5 bis 70 Vol.-%, bevorzugt im Bereich von 15 bis 50 Vol.-% liegt.

7. Flächenelement nach einem der vorangehenden Ansprüche, **dadurch gekennzeichnet, dass**
die Füllstoffpartikeln einen mittleren Durchmesser von mindestens 1 µm, bevorzugt zwischen 2 µm und 500 µm, sehr bevorzugt zwischen 2 und 200 µm, äußerst bevorzugt zwischen 40 µm und 150 µm, aufweisen.

## Claims

1. Sheetlike element comprising at least one heat-activatable adhesive, at least one inductively heatable material, and at least one thermally conductive filler, **characterized in that**
the material of the filler has a thermal conductivity of at least 0.5 W/(m*K) and is electrically nonconducting and
the electrical conductivity of the sheetlike element in a direction perpendicular to its average areal extent is zero.

2. Sheetlike element according to one of the preceding claims, **characterized in that**
the thermally conductive filler is used in the form of filler particles and/or comprises filler particles.

3. Sheetlike element according to Claim 2, **characterized in that**
the filler particles are aluminium oxide particles which consist to a proportion of more than 95% by weight of alpha-aluminium oxide.

4. Sheetlike element according to Claim 3, **characterized in that**
the proportion of the aluminium oxide particles, based on the heat-activatable adhesive with the filler, is in the range from 20% to 90% by weight, more particularly in the range from 40% to 80% by weight.

5. Sheetlike element according to any of Claims 2 to 4, **characterized in that**
the filler particles are primary particles having a specific surface area per unit mass of 1.3 m² or less, more particularly of 1.0 m² or less.

6. Sheetlike element according to any of Claims 2 to 5, **characterized in that**
the proportion of the primary particles, based on the heat-activatable adhesive with the filler, is in the range from 5% to 70% by volume, preferably in the range from 15% to 50% by volume.

7. Sheetlike element according to any of the preceding claims, **characterized in that**
the filler particles have an average diameter of at least 1 µm, preferably between 2 µm and 500 µm, very preferably between 2 and 200 µm, extremely preferably between 40 µm and 150 µm.

## Revendications

1. Élément plat, comprenant au moins une masse adhésive thermoactivable, au moins un matériau pouvant être chauffé par induction ainsi qu'au moins une charge thermoconductrice, **caractérisé en ce que**
le matériau de la charge présente une conductibilité thermique d'au moins 0,5 W/(m*K) et est électriquement non conducteur et
la conductibilité électrique de l'élément plat dans la direction perpendiculaire à son extension surfacique moyenne vaut zéro.

2. Élément plat selon l'une quelconque des revendications précédentes, **caractérisé en ce que** la charge thermoconductrice est utilisée sous forme de particules de charge et/ou comprend des particules de charge.

3. Élément plat selon la revendication 2, **caractérisé en ce que** les particules de charge sont des particules d'oxyde d'aluminium qui sont constituées, à raison d'une proportion de plus de 95% en poids, d'alpha-oxyde d'aluminium.

4. Élément plat selon la revendication 3, **caractérisé en ce que** la proportion de particules d'oxyde d'aluminium, par rapport à la masse adhésive thermoactivable comprenant la charge, se situe dans la plage de 20 à 90% en poids, en particulier dans la plage de 40 à 80% en poids.

5. Élément plat selon l'une quelconque des revendications 2 à 4, **caractérisé en ce que** les particules de charge sont des particules primaires présentant une surface spécifique par rapport à la masse de 1,3 m² au moins, en particulier de 1,0 m² ou moins.

6. Élément plat selon l'une quelconque des revendications 2 à 5, **caractérisé en ce que** la proportion des particules primaires, par rapport à la masse adhésive thermoactivable comprenant la charge, se situe dans la plage de 5 à 70% en volume, de préférence dans la plage de 15 à 50% en volume.

7. Élément plat selon l'une quelconque des revendications précédentes, **caractérisé en ce que** les particules de charge présentent un diamètre moyen d'au moins 1 µm, de préférence entre 2 µm et 500 µm, très préférablement entre 2 et 200 µm, de manière extrêmement préférée entre 40 µm et 150 µm.
